# EUROPÄISCHE PATENTSCHRIFT

(11) **EP 2 469 320 B1**
(45) Veröffentlichungstag und Bekanntmachung des Hinweises auf die Patenterteilung: **03.04.2019**
(21) Anmeldenummer: 11009917.3
(22) Anmeldetag: 16.12.2011
(51) Int. Cl.: G02B 21/00

(54) **Verfahren zum Betreiben eines konfokales Laser-Scanning-Mikroskops mit einstellbarem Pinhole in Form einer matrixartigen Verteilung einzeln auslesbarer Empfängerelemente**
Method of operating a confocal laser scanning microscope comprising an adjustable pinhole comprising matrix of sensor elements, which can be selectively read out
Procédé de fonctionnement d'un microscope à balayage laser confocal comprenant un sténope ajustable comprenant une matrice d'éléments de détection adaptée à la lecture sélective

(30) Priorität: 22.12.2010 DE 102010055882
(43) Veröffentlichungstag der Anmeldung: 27.06.2012
(73) Patentinhaber: Carl Zeiss Microscopy GmbH, 07745 Jena (DE)
(72) Erfinder: LIEDTKE, Mirko, 07745 Jena (DE)
(74) Vertreter: Meyer, Jork

(56) Entgegenhaltungen:
- US-A1- 2006 012 871
- US-A1- 2006 140 462

## Beschreibung

### Stand der Technik

Konfokale Laser-Scanning-Mikroskope (LSM) sind beispielsweise aus der US 2006/0140462 A1 bekannt. Das dort beschriebene Abbildungssystem umfasst eine Lichtquelle zur Bereitstellung eines Beleuchtungslichts, einen Scanner und einen ansteuerbare räumlichen Filter zur selektiven Filterung des von einer Probe erhaltenen Detektionslichts. Der Scanner und der Filter werden mittels einer Steuereinheit angesteuert und geregelt. Mittels des Abbildungssystems können Bilder von einem oder mehreren interessierenden Bereichen erfasst werden.

Ebenfalls kann wenigstens ein interessierender Bereich einer Probe mit einem Mikroskop gemäß der US 2006/0012871 A1 beobachtet und abgebildet werden. Dazu wird eine linienförmige Beleuchtung über die Probe geführt und von der Probe kommende Strahlung erfasst und descannt. Eine konfokale Abbildung wird mittels einer Schlitzblende und mindestens einen Detektor erzeugt.

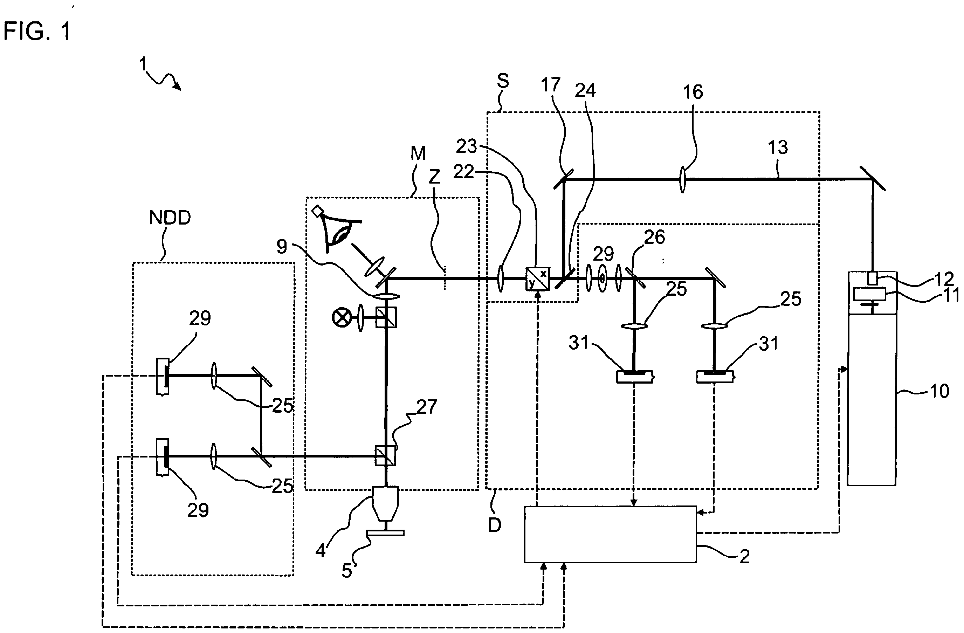

Fig. 1 zeigt ein Mikroskop 1 in Form eines Laser-Scanning-Mikroskops (LSM) in einer schematischen Darstellung. Es besteht aus einer Mikroskopeinheit M und einer Scaneinheit S, die eine gemeinsame optische Schnittstelle über eine Zwischenabbildung Z aufweisen, sowie aus einer Detektionseinheit zur descannten Detektion D und einer weiteren Detektionseinheit zur nicht descannten Detektion NDD. Die Scaneinheit S kann sowohl an den Phototubus eines aufrechten Mikroskops als auch an einen seitlichen Ausgang eines inversen Mikroskops angeschlossen werden. Die Mikroskopeinheit M weist ein Objektiv 4 und eine Tubuslinse 9 zum Beobachten einer Probe 5 auf. Ein Laser 10, dessen Laserstrahl nach dem Austritt zunächst frei propagiert und durch ein akustooptisches Bauelement 11, beispielsweise ein AOTF, hindurchtritt, ist als Anregungslichtquelle vorgesehen. Der Laserstrahl wird dann durch eine Koppeloptik 12 und eine Lichtleitfaser 13 in den Beleuchtungsstrahlengang der Scaneinheit S eingekoppelt. Der Laserstrahl kann mittels des akustooptischen Bauelements 11 von der Steuereinheit 2 ausgeblendet werden.

Die Scaneinheit S enthält eine Kollimationsoptik 16, einen Umlenkspiegel 17, ein Scanning-Objektiv 22, einen Scanner 23, und einen Hauptfarbteiler 24. Über eine Pinholeoptik 29 mit einem zentralen Pinhole (Lochblende) durch das das Detektionslicht hindurchgefädelt wird gelangt das von der Probe kommende Probenlicht in die Detektionseinheit D. Durch einen Nebenfarbteiler 26 wird das Probenlicht spektral getrennt über Abbildungsoptiken 25 auf mehrere Detektoren 31 gelenkt.

Ergänzend kann das Mikroskop auch mit einer nicht descannten Detektionseinheit NDD versehen sein. Probenlicht gelangt dann über einen vorzugsweise objektivnah angeordneten NDD-Strahlteiler 27 in die nicht descannte Detektionseinheit NDD. Die nicht descannte Detektionseinheit kann auch in bekannter Weise im Durchlicht verwendet werden (nicht gezeigt).

Ein derartiges Laser-Scanning- Mikroskop ist auch Gegenstand der DE 19702753 A1.

Hier sind mehrere Detektionspinholes in einzelnen Strahlengängen hinter einer gemeinsamen Pinholeoptik beschrieben die in ihrem Durchmesser verstellbar sind und weiterhin zum Ausgleich optischer Fehler der verwendeten Mikroskopoptik auch axial und lateral zum Detektionsstrahlengang ansteuerbar verschieblich ausgebildet sind.

Um Unzulänglichkeiten in der Optik auszugleichen gibt es auch weitere Ansätze, wie z.B. adaptive Optiken oder verformbare Spiegel (EP 929826 B1).

Erfindungsgemäß ist nun erkannt worden dass es einfacher ist, diese Korrekturen im Detektor selbst vorzunehmen indem ein ortsauflösender Flächenempfänger so gestaltet wird das beispielsweise vorteilhaft nur die Bereiche der leichtempfindlichen Fläche ausgewertet werden, die auch zum Bildinhalt beitragen.

Dies ist Gegenstand des unabhängigen Patentanspruchs.

Bevorzugte Weiterbildungen sind Gegenstand der abhängigen Patentansprüche.

Im Unterschied zum Stand der Technik (CCD Empfängermatritzen die seriell ausgelesen werden)
ist eine Detektormatrix vorgesehen, die nicht komplett ausgelesen wird (ein wesentlicher zeitlicher Nachteil, der diesen Ansatz für Punktscanner unbrauchbar macht), sondern wo jedes einzelne Pixel getrennt ausgelesen, aber auch wahlfrei zusammen gebinnt (zusammengefasst) werden kann.

Durch gezielte Auswahl der aktiven und inaktiven Pixel kann beispielsweise vorteilhaft auch ein sehr variables Pinhole nachgebildet werden.

Im Folgenden werden die Begriffe Pinhole und Lochblende äquivalent eingesetzt und im Sinne einer insbesondere in ihrem Durchmesser einstellbaren Lochblende verstanden.

Der Empfänger wird hierzu im Detektionsstrahlengang in die Pinholeebene gesetzt. Ist ein größeres Pinhole erforderlich, werden einfach mehr Pixel zusammengefasst: Auch eine Justage des Pinholes entfällt, weil einfach andere Pixel ausgewählt werden können.

Ebenso können Abweichungen vom Optimum besser abgebildet werden, da der Detektionsspot durchaus nicht immer rund sein wird.

Auch komplexere Abbildungsfehler lassen sich erfassen bzw. Bildanteile visualisieren, welche sonst durch das Pinhole abgeschnitten worden wären, indem diese Bereiche getrennt erfasst und ausgewertet werden.
Durch diese getrennten Betrachtungen können bei bekannter Gerätefunktion optische Fehler des Systems herausgerechnet und die Auflösung des Systems gesteigert werden.

Weiterhin ist durch die unterschiedliche Spotform auch eine Bestimmung des Fokus denkbar- ob man beispielsweise über oder unter der Fokusebene befindet.

Als Detektorelement können Dioden, APDs, PMTs oder jedes andere geeignete Mittel verwendet werden, solange jeder Sensor einzeln auslesbar ist und somit Auslesezeiten kleiner 1 µsek, wie sie in einem LSM gebraucht werden, realisiert werden können.
Die Erfindung ist sowohl bei Laser- Scanning Mikroskopen mit mehreren Pinholes in separaten, durch dichroitische Strahlteiler getrennten Detektionskanälen anwendbar als auch besonders vorteilhaft bei simultaner Beleuchtung mit mehreren Punktlichtquellen wie in US6028306 beschrieben, wobei mehrere erfindungsgemäße Empfängeranordnungen an die Orte in der Detektion gesetzt werden an denen sich bisher Lochblenden befanden.
Diese können dann individuell auf die auftreffenden Lichtverteilungen eingestellt werden, aber auch, beispielsweise anschließend an eine individuelle Einstellung, synchron, z.B. zum "oversampling" Betrieb wie unten beschrieben, in ihrer Ansteuerung verändert werden.

Die Erfindung wird nachstehend anhand der schematischen Zeichnungen näher erläutert.
Es zeigen:
Fig. 2- Fig. 6: Bespiele für Auswertungen einer Empfängermatrix
Fig. 7: Ein Ausleseschema für eine matrixförmige APD (Avalanche Photodioden-) Anordnung
Fig. 8 : Die Auslesung einer PMT Empfängermatrix

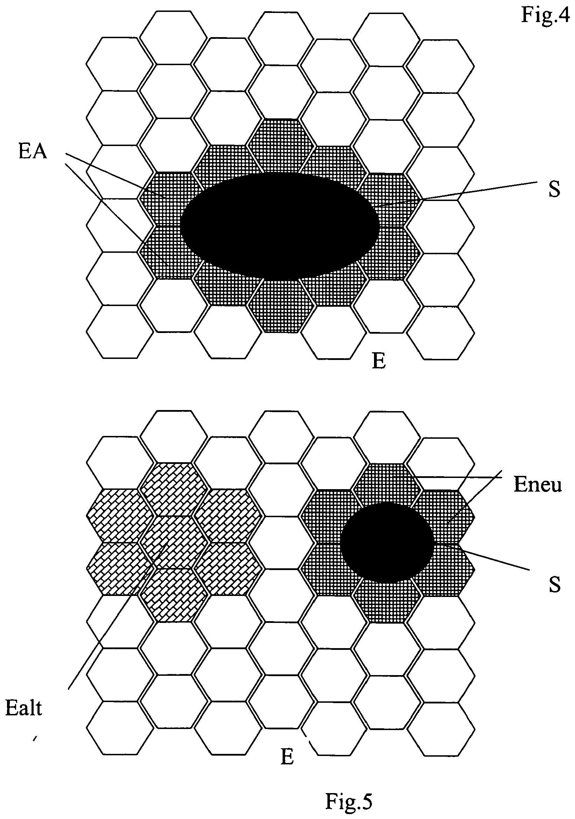

Den Zeichnungen Fig. 4-6 ist gemeinsam die Darstellung von matrixförmig angeordneten, einzeln auslesbaren und zusammenschaltbaren Empfängern E, eines auf die Matrix fokussierten Strahlspots S, des Detektionsstrahls sowie aktivierten (ausgelesenen) Empfängern EA der Detektionsmatrix.

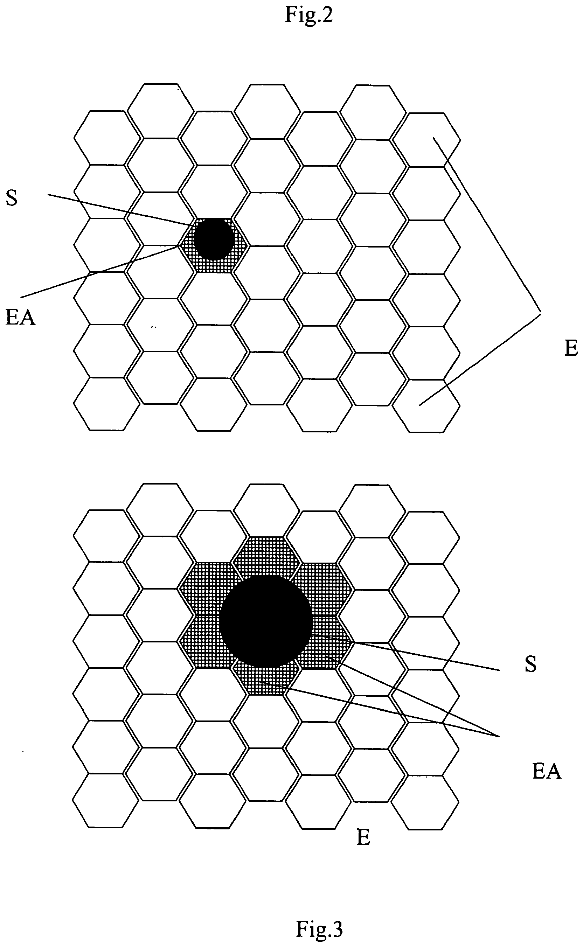

In Fig. 2 ist der Strahlspot S in einer Größenordnung und Lage die es gestattet, nur ein einziges Detektorelement EA auszulesen.

Die Lage des Spots S auf der Matrix wird durch wechselweises An- und Ausschalten einzelner Elemente E vor der eigentlichen Messung (dem Scanvorgang) ermittelt.

Auf diese Weise kann die oben beim Stand der Technik dargestellte aufwendige Korrektur entfallen und dennoch eine korrekte Messung erfolgen.

In Fig. 3 sind zur Auswertung eines größeren Spots S mehrere Elemente EA aktiviert und auslesbar, die in ihrer Wirkung hier ein größeres Pinhole als in Fig.2 simulieren. In Fig. 4 ist ein von der runden Form ellipsoid abweichender Spot S dargestellt, der dennoch durch entsprechend ellipsoide Verteilung der aktiven Elemente EA vollständig ausgelesen werden kann.

Im Gegensatz zum Stand der Technik kann durch die Auswahl der aktiven Empfängerelemente nahezu jede beliebige Pinholeform gewählt werden während bisher übliche Lochblenden im Allgemeinen auf runde, quadratische oder rhombische Grundformen festgelegt waren.

Durch Deaktivierung der übrigen Elemente E der Empfängermatrix wird das Streulicht und anderes unerwünschtes Licht, das nicht aus dem Strahlfokus in der Probe stammt, unterdrückt.

Hierbei kann auch durch gezielte Erhöhung oder Verringerung der aktivierten Elemente direkt vor Wiederholung eines Scanvorgangs zur Erzeugung eines Scanbildes eine Veränderung der Pinholegröße erfolgen. Das wird zum Beispiel beim sogenannten "oversampling" bei einer Verkleinerung der Pinholegröße angewandt und ist hier auf besonders einfache Weise realisierbar.

Anstelle dieser "Überabtastung" kann natürlich auch eine Unterabtastung mit vergrößertem Pinholedurchmesser eingestellt werden.

Die Stärke der vorliegenden Erfindung liegt ja gerade in Ihrer Variabilität, ohne dabei auf mechanische Einstellelemente zurückgreifen zu müssen.

Wo bisher eine aufwendige Verschiebung des Pinholes (wie oben erwähnt) erfolgen musste, kann nunmehr wie in Fig. 5 gezeigt, einfach die bisher aktivierte Empfängerfläche E alt durch eine neue Empfängerfläche E neu entsprechend der Lage von S ersetzt werden.

Das kann bei Veränderungen in der Mikroskopoptik wie dem Wechsel zwischen verschiedenen Linsen oder Objektiven, relativ häufig auftreten und ist nunmehr auf einfache Weise regelbar und automatisierbar.

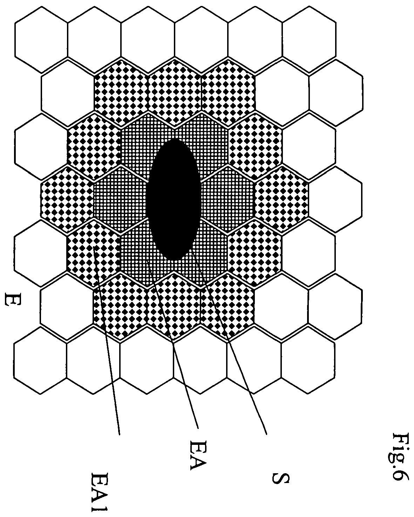

In Fig. 6 ist neben der aktiven Empfängerverteilung EA eine weitere um dies gruppierte Empfängerverteilung EA 1 dargestellt. Dies kann vorteilhaft sein wenn sich der Spot (Fleck) in seiner Größe und/ oder Form ändert.

Das kann der Fall sein, wenn bei konstanter Fokussierung eine z- Verstellung der Probe erfolgt.

Hierbei kann aus der Form- bzw. Größenveränderung eine Höheninformation abgeleitet werden.

Werden die Elemente EA1 vom Spot S mit Licht beaufschlagt, wird erfindungsgemäss ein Regelsignal zur Höhenkorrektur (Refokussierung) ausgelöst.

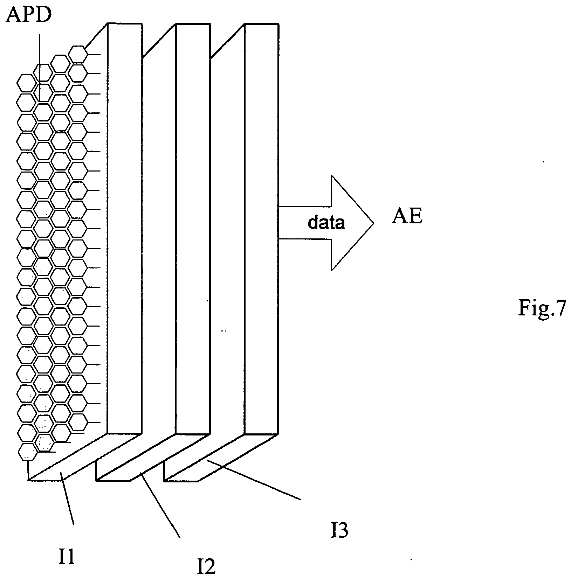

In Fig. 7 ist ein Realisierungsbeispiel für eine matrixförmige APD Anordnung auf einem integrierten Schaltkreis I1, der mit weiteren Schaltkreisen, beispielsweise einem Verstärkerschaltkreis I2 und einem Zählerschaltkreis I3, beispielsweise im "interconnect" Verfahren verbunden sein kann, dargestellt.

I1 kann beispielsweise die Zähler der Einzelphotonen darstellen, die die jeweilige APD nach Empfang eines Photons erfasst bevor sie sich durch den internen Löschkreis zurückstellt, die der die Signale (Photonen) der einzelnen APD einzeln ausliest (zählt und an einen Router (Verknüpfer) in I2 weiterleitet, wobei in I2 eine einstellbare Verknüpfung von den einzeln gezählten Lichtpulsen erfolgt, die beispielsweise in I3 über eine GPU (Grafikprozessor) Einheit zur Entlastung des Hauptrechners und Bildzusammensetzung durch Synchronisierung mit dem Scanvorgang in Richtung einer Auswerteeinheit (Rechner) AE übertragen werden.

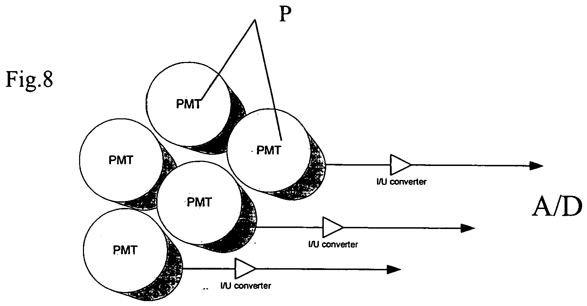

In Fig. 8 sind mehrere PMT in entsprechender Weise wie in Fig. 1-7 angeordnet, die einzeln ausgelesen werden, über I/U Konverter und AD Wandler A/D wie dargestellt.

Durch die Größenverhältnisse im Durchmesser zwischen APD und PMT (APD ca.150 µm. PMT 20 mm) ist natürlich im Rahmen fachmännischer Einstellung eine Veränderung der optische Bedingungen (Strahlaufweitung) erforderlich, wenn statt APD matrixförmig angeordnete PMT verwendet werden sollen.

## Patentansprüche

1. Verfahren zum Betrieb eines Laser - Scanning- Mikroskops (1) mit einer Lichtquelle (10), einem Beleuchtungsstrahlengang zur Beleuchtung einer Probe (5) mit einem räumlich begrenzten punktförmigen Beleuchtungslichtfleck über eine Scaneinrichtung und ein Objektiv und einem Detektionsstrahlengang zur Erfassung des Probenlichtes, das über das Objektiv und die Scaneinrichtung in den Detektionsstrahlengang gelangt,
wobei im Detektionsstrahlengang Fokussiermittel angeordnet sind, die das Probenlicht zu einem räumlich begrenzten Detektionslichtfleck (S) in eine Pinholeebene fokussieren, in der sich eine zweidimensionale, matrixartige Verteilung einzeln auslesbarer Empfänger (E) befindet,
wobei zur Simulation einer einstellbaren Lochblende in der Pinholeebene die anstelle einer Lochblende angeordneten Empfänger (E) einzeln ausgelesen werden, wobei nur ein Bereich detektiert wird der von einem Detektionslichtfleck mit Detektionslicht beaufschlagt wird,
**dadurch gekennzeichnet, dass**
bei einem Wechsel der Betriebsbedingungen des Laser - Scanning- Mikroskops (1) oder vor einer ersten Bildaufnahme durch Auslesen der Empfänger (E)
der mit Detektionslicht beaufschlagte Bereich durch wechselweises An- und Ausschalten einzelner Elemente (E) gesucht und für die weitere Detektion zumindest teilweise zur Detektion genutzt wird
und
eine erste Gruppe von Empfängern (EA) zur Erfassung des Detektionslichtflecks (S) und eine um diese herum gruppierte zweite Gruppe von Empfängern (EA1) angeordnet sind und eine Lichterfassung mit der zweiten Gruppe von Empfängern (EA1) ein Regelsignal für die Z- Fokussierung auslöst.

2. Verfahren nach Anspruch 1, wobei
nach Erstellung eines Scanbildes die Anzahl der ausgelesenen Empfänger und damit die Lochblendengröße verkleinert oder vergrößert wird und mindestens ein weiteres Scanbild durch zweidimensionales Abscannen eines Bildbereiches erzeugt wird.

3. Verfahren nach einem der Ansprüche 1 oder 2, wobei
die Form einer Gruppierung ausgelesener Empfänger an die Form des Detektionslichtflecks (S) angepasst wird.

4. Verfahren nach einem der Ansprüche 1 bis 3, wobei
nach Aufsuchen des beaufschlagten Bereichs eine Gruppe von Empfängern zur Detektion genutzt wird, die mit diesem Bereich einen gemeinsamen Symmetriepunkt oder eine gemeinsame Symmetrieachse aufweist.

5. Verfahren nach einem der Ansprüche 1 bis 4, wobei
das Laser Scanning - Mikroskop (1) mit einer simultanen Mehrpunktabtastung mit mindestens zwei Beleuchtungslichtflecken und einer diesen zugeordneten Detektion mit mindestens zwei Detektionsstrahlengängen betrieben wird.

## Claims

1. Method for operating a laser scanning microscope (1) comprising a light source (10), an illumination beam path for illuminating a sample (5) with a spatially delimited punctiform illumination light spot via a scanning device and an objective, and a detection beam path for detecting the sample light that passes into the detection beam path via the objective and the scanning device,
wherein focusing means are arranged in the detection beam path and focus the sample light to form a spatially delimited detection light spot (S) into a pinhole plane in which is situated a two-dimensional matrixlike distribution of individually readable receivers (E),
wherein for the simulation of an adjustable pinhole stop in the pinhole plane the receivers (E) arranged instead of a pinhole stop are read individually, wherein only a region that is exposed to detection light by means of a detection light spot is detected,
**characterized in that**
in the event of change in the operating conditions of the laser scanning microscope (1) or before a first image recording by means of reading the receivers (E), the region exposed to detection light is sought by means of alternately switching individual elements (E) on and off and for the further detection is utilized at least partly for detection purposes and a first group of receivers (EA) for detecting the detection light spot (S) and a second group of receivers (EA1) grouped around said first group are arranged and a light detection by the second group of receivers (EA1) triggers a control signal for the Z-focusing.

2. Method according to Claim 1, wherein
after creating a scan image, the number of receivers read and thus the size of the pinhole stop are decreased or increased and at least one further scan image is generated by means of two-dimensionally scanning of an image region.

3. Method according to either of Claims 1 and 2, wherein
the shape of a grouping of receivers read is adapted to the shape of the detection light spot (S).

4. Method according to any of Claims 1 to 3, wherein after seeking the exposed region, a group of receivers that shares a point of symmetry or of an axis of symmetry with said region is utilized for detection purposes.

5. Method according any of Claims 1 to 4, wherein
the laser scanning microscope (1) is operated with a simultaneous multi-point scanning with at least two illumination light spots and, assigned thereto a detection with at least two detection beam paths.

## Revendications

1. Procédé pour faire fonctionner un microscope à balayage laser (1) comprenant une source de lumière (10), un trajet de rayon d'éclairage destiné à éclairer un échantillon (5) avec un spot lumineux d'éclairage ponctuel limité dans l'espace par le biais d'un dispositif de balayage et d'un objectif et un trajet de rayon de détection destiné à capturer la lumière d'échantillon qui parvient dans le trajet de rayon de détection par le biais de l'objectif et du dispositif de balayage,
des moyens de concentration étant disposés dans le trajet de rayon de détection, lesquels concentrent la lumière d'échantillon dans un plan de trou d'épingle en un spot lumineux de détection (S) limité dans l'espace, dans lequel se trouve une distribution bidimensionnelle de type matrice de récepteurs (E) lisibles individuellement, les récepteurs (E) disposés à la place d'un obturateur perforé étant lus individuellement en vue de simuler un obturateur perforé réglable dans le plan du trou d'épingle, seule étant détectée une zone qui est sollicitée avec la lumière de détection par un spot lumineux de détection,
**caractérisé en ce que**
lors d'un changement des conditions de fonctionnement du microscope à balayage laser (1) ou avant un premier enregistrement d'image par lecture des récepteurs (E), la zone sollicitée avec la lumière de détection est recherchée par mise en circuit et hors circuit alternée des éléments (E) individuels et est utilisée au moins partiellement pour la détection pendant la suite de la détection
et
un premier groupe de récepteurs (EA) est disposé pour la détection du spot lumineux de détection (S) et un deuxième groupe de récepteurs (EA1) groupé autour de celui-ci est disposé, et une détection de lumière par le deuxième groupe de récepteurs (EA1) déclenche un signal de régulation pour la concentration Z.

2. Procédé selon la revendication 1, selon lequel, après la création de l'image de balayage, le nombre de récepteurs lus et ainsi la taille de l'obturateur perforé sont réduits ou augmentés et au moins une image de balayage supplémentaire est générée par balayage bidimensionnel d'une zone d'image.

3. Procédé selon l'une des revendications 1 ou 2, selon lequel la forme d'un groupement de récepteurs lus est adaptée à la forme du spot lumineux de détection (S).

4. Procédé selon l'une des revendications 1 à 3, selon lequel, après la recherche de la zone sollicitée, un groupe de récepteurs est utilisé pour la détection, lequel présente avec cette zone un point de symétrie commun ou un axe de symétrie commun.

5. Procédé selon l'une des revendications 1 à 4, selon lequel le microscope à balayage laser (1) est utilisé avec un échantillonnage multipoint simultané avec au moins deux spots lumineux d'éclairage et une détection qui leur est associée avec au moins deux trajets de rayon de détection.
